# EUROPÄISCHE PATENTSCHRIFT

(11) **EP 0 703 881 B1**
(45) Veröffentlichungstag und Bekanntmachung des Hinweises auf die Patenterteilung: **15.07.1998**
(21) Anmeldenummer: 95915833.8
(22) Anmeldetag: 30.03.1995
(51) Int. Cl.: C04B 33/13, C04B 33/18, C04B 35/634

(54) **VERWENDUNG VON LACKABFALL, LACKKOAGULAT UND MIT LACKABFALL BEAUFSCHLAGTEN FESTSTOFFEN**
USE OF WASTE ENAMEL, COAGULATED ENAMEL AND SOLID MATERIALS TARNISHED WITH WASTE ENAMEL
UTILISATION DE DECHETS DE VERNIS-EMAIL, DE VERNIS-EMAIL COAGULE ET DE MATIERES SOLIDES TACHEES DE RESIDUS DE VERNIS-EMAIL

(30) Priorität: 30.03.1994 DE 4411135
(43) Veröffentlichungstag der Anmeldung: 03.04.1996
(73) Patentinhaber: Zeller + Gmelin GmbH & Co, 73054 Eislingen (DE)
(72) Erfinder: SCHLIPF, Michael, D-73035 Göppingen (DE)
(74) Vertreter: Zumstein, Fritz, Dr.
(86) Internationale Anmeldenummer: EP9501193
(87) Internationale Veröffentlichungsnummer: WO9526939

(56) Entgegenhaltungen:
- EP-A- 0 212 214
- DE-A- 2 908 798
- DE-A- 3 150 718
- DATABASE WPI Week 8723 Derwent Publications Ltd., London, GB; AN 87-160116 & JP-A-62 094 335 (NISSAN MOTOR KK) , 30.April 1987
- DATABASE WPI Week 8404 Derwent Publications Ltd., London, GB; AN 84-21187 & JP-A-58 213 047 (NISSAN MOTOR KK) , 10.Dezember 1983

## Beschreibung

Bei der Beschichtung von Gegenständen mit organischen Überzügen, insbesondere Lacken und Klebstoffen, in Lackieranlagen fallen die Überzugsmaterialien teilweise als Abfall an. Der Abfall entsteht dadurch, daß die unterschiedlichen Aufbringungsverfahren Wirkungsgrade < 1 aufweisen.

Insbesondere in der Spritz- und Sprühapplikation entstehen große Abfallmengen durch das Vorbeispritzen von Beschichtungsmassen am zu beschichtenden Gegenstand (Overspray). Typischerweise werden solche Lacknebel mit Hilfe von Abscheidern in Lackieranlagen erfaßt.

Ein hierzu verwendeter erster Abscheidertyp sind die sogenannten Trockenabscheider, bei denen der Lackoverspray mit geeigneten Vorrichtungen, z.B. Filtermatten, aus der Abluft separiert wird. Der anfallende Abfall besteht dann beispielsweise aus Filtermatten, die mit polymerisiertem oder nicht polymerisiertem Lack verschmutzt sind.

Derartige Trockenabscheider-Anlagen werden bevorzugt bei geringen Overspray-Raten in großen Lackieranlagen wie z.B. in Autoreparatur-Werkstätten, bei der Omnibus- und Flugzeuglakkierung, in der Möbel- und Holzindustrie oder in Maschinenbaubetrieben verwendet.

Andererseits kann Lacknebel auch mit Hilfe von sogenannten Naßwäschern aus der Abluft entfernt werden. Dabei wird das Luft-Lack-Gemisch im Wäscher mit Wasser, dem Entklebungs- oder Koaguliermittel zugesetzt sind, homogenisiert. Danach erfolgt eine mechanische Trennung von Luft und Wasser/Feststoffen. Da das Wasser im Kreislauf gefahren wird, besteht der hierbei anfallende Abfall in den meisten Fällen aus einem Wasser/-Lack/Hilfsmittel-Gemisch.

Lackieranlagen mit Wasserabscheidung werden vor allem in der Automobilindustrie, der Zulieferindustrie, der Holz- und Möbelindustrie, dem Maschinenbau, dem Motoren- und Getriebebau, dem Regalbau, bei der Motorrad- und Fahrradherstellung etc. eingesetzt.

Bei nur wenigen Anwendungsfällen fällt das genannte Wasser-Lack/Hilfsmittel-Gemisch relativ sortenrein an. Dies rührt daher, daß sehr häufig mehr als eine Lacksorte und mehr als ein Farbton innerhalb einer Lackieranlage verarbeitet werden. Dadurch wird ein Lackkoagulatgemisch, bestehend aus Wasser, verschiedenen Bindemittel- und Pigmenttypen, sowie zusätzlich Koagulierungsprodukten und weiteren Hilfsmitteln, z.B. Entschäumer, erzeugt.

Da es sich bei den Lackinhaltsstoffen (insbesondere Lackbindemittel und Pigmente) um wirtschaftlich und energetisch hochwertige Produkte handelt, ist man bestrebt, diese in den Stoffkreislauf zurückzuführen.

Aufbereitungsverfahren von Lackkoagulaten werden z.B. in der EP-A 488 449 und der EP-A 34 555 beschrieben. Beide Verfahren gehen davon aus, daß das Lackkoagulat sortenrein erfaßt werden muß, um wiederaufgearbeitet im ursprünglichen Lackherstellungsprozeß eingesetzt werden zu können.

Im einzelnen wird in der EP-A 488 449 unter anderem ein Verfahren beschrieben, in dem als Koaguliermittel Tonerde eingesetzt wird. Dadurch werden große Mengen Lackkoagulat mit hohem Wassergehalt (> 50%) erzeugt. Mit Hilfe von Koaguliermitteln auf organischer Basis, z.B. Wachsdispersionen, wie sie in der DE-PS 27 58 873 beschrieben sind, lassen sich Lackkoagulate mit geringem Koaguliermittel- und Wasseranteil (ca. 20%) erzeugen.

Alle genannten Aufbereitungsverfahren beschäftigen sich mit nicht reaktiven Einkomponenten-Lacksystemen, die bei hohen Temperaturen (60 - 140°C) ausgehärtet werden.

Reaktive Zwei-Komponenten-Lacksysteme (z.B. Polyurethan-Lacke, Polyol/Isocyanat-Systeme, Zwei-Komponenten-Epoxysysteme usw.), sowohl bei Raumtemperatur als auch bei höherer Temperatur trocknend, können derzeit aus dem Lackkoagulat nicht zu Lack zurückgewonnen werden, insbesondere wenn sie nicht sortenrein gesammelt werden.

Zur Zeit werden Lackkoagulate aus solchen Systemen deponiert oder verbrannt, höchstens thermisch verwertet.

Bei der Suche nach höherwertigen Verwertungskonzepten, die vor allem die stofflichen Eigenschaften des Reststoffes Lackkkoagulat ausnutzen sollen, wurde nun überraschend gefunden, daß beim Einsatz von Lackabfall, Lackkoagulat und mit Lackabfall beaufschlagten Feststoffen in den Ausgangsmischungen für gebrannte Tonmaterialien, z. B. Ziegelbaustoffe, insbesondere Ziegelsteine, bessere Dämmeigenschaften und/oder günstigere mechanische Werte, z. B. Biegefestigkeit, erzielt werden. Hierdurch wird es insbesondere möglich, einem Festigkeitsverlust und Zerbrechen von Tonwaren nach dem Brennen vorzubeugen.

Gegenstand der Erfindung ist somit die Verwendung von Lackabfall, Lackkoagulat oder mit Lackabfall beaufschlagten Feststoffen aus Lackieranlagen als Bestandteil für die Herstellung von gebrannten Tonmaterialien mit verbesserter Wärmedämmung und/oder verbesserten mechanischen Eigenschaften in einer Menge von 0,1 bis 30 Gew.-%, bezogen auf die nicht-gebrannte Tonmaterialmischung.

Den erfindungsgemäß zu verwendenden Lackabfällen, Lackkoagulaten oder mit Lackabfall beaufschlagten Feststoffen können sämtliche Lacke zugrundegelegt werden, wie sie eingangs im Zusammenhang mit dem Stand der Technik angeführt wurden. Sie umfassen sämtliche gängige Lacktypen, die derzeit in Lackieranlagen eingesetzt werden. Derartige Lacke beinhalten reaktive, mehrkomponentige Lacke sowie auch ofentrocknende und bei Normaltemperatur trocknende Einkomponenten-Lacke. Bei den reaktiven, mehrkomponentigen Lacken handelt es sich insbesondere um reaktive, Zwei-Komponenten-Lacksysteme, wie z. B. Polyurethan-Lacke, Polyol/Isocyanat-Systeme, Zwei-Komponenten-Epoxysysteme etc.

Es versteht sich, daß auch Gemische verschiedender Lacktypen bzw. Lacksysteme dem erfindungsgemäß zu verwendenden Lackabfall, Lackkoagulat oder mit Lackabfall beaufschlagten Feststoffen zugrundeliegen können. Ein Beispiel für zugrundeliegende Lacke sind typische Lacke aus der Kunststofflackierung, z. B. der Automobilzulieferer. Derartige Lackkoagulate können beispielsweise aus ca. 80 % Zwei-Komponenten-Lack und ca. 20 % Ein-Komponenten-Lack bestehen.

Das erfindungsgemäß zum Einsatz gelangende Lack-Abfallprodukt kann nach einem Naßverfahren wie auch nach einem Trockenverfahren gewonnen worden sein. Diese Verfahren wurden eingangs im Zusammenhang mit dem Stand der Technik beschrieben.

Bei dem Naßverfahren einsetzbare Koaguliermittel sind insbesondere anorganische Produkte, wie z. B. CaCl₂, Al(OH)₃, Schichtsilikate usw., oder organische Produkte, wie z. B. Wachsdispersionen und organische Polymere. Geeignete Koaguliermittel sind dem Fachmann hinreichend bekannt. Eine alternative Koagulatgewinnung kann aber auch über ein elektrostatisches Verfahren, wie z. B. in einem Koagulierrohr erfolgen.

Gemäß einer bevorzugten Ausführungsform setzt man ein einer Naßabscheidung entstammendes Lackkoagulat ein, welches durch mechanische Entwässerung auf einen Festkörpergehalt von 20 bis 95 Gew.-%, vorzugsweise 60 bis 80 Gew.-%, gebracht worden ist. Eine Erhöhung des Festkörpergehalts des nach dem Naßverfahren anfallenden Lackkoagulats ist jedoch auch mit Hilfe einer thermischen Trocknung möglich, bei der sich Festkörpergehalte bis zu 100 Gew.-% erzielen lassen.

Die durch Trockenabscheidung erhaltenen, mit Lackabfall beaufschlagten Feststoffe werden vor ihrer erfindungsgemäßen Verwendung nötigenfalls zerkleinert. Dies gilt insbesondere für mit Lack beaufschlagte Filtermatten, die vor ihrer Verwendung in geeigneter Weise, z. B. mit einem Schredder, zerkleinert werden. Die Filtermatten selbst sind für die erfindungsgemäße Verwendung bei entsprechender Berücksichtigung in der Herstellungsrezeptur nicht störend.

Die Einsatzmenge der erfindungsgemäß zu verwendenden Abfallprodukte liegt in einem Bereich von 0,1 bis 30 Gew.-%, bezogen auf die nicht-gebrannte Tonmaterialmischung. Die im jeweiligen Einzelfall zu verwendende Menge hängt von Faktoren wie dem Festkörpergehalt des Lackabfallproduktes ab und kann vom Fachmann ohne Schwierigkeit festgelegt werden. Bevorzugte Einsatzmengen liegen im Bereich von 0,1 bis 20, insbesondere 1 bis 10 und vor allem 1 bis 5 Gew.-%, bezogen auf die nicht-gebrannte Tonmaterialmischung.

Bei der erfindungsgemäßen Verwendung wird das Lackabfallprodukt in eine übliche Tonmaterialausgangsmischung unter geeigneten Mischbedingungen in den angegebenen Mengen eingearbeitet, die Mischung - so weit geformte Endprodukte herzustellen sind - geformt und nach üblichen Verfahren gebrannt.

Die Tonmaterialmischung selbst unterliegt hinsichtlich ihrer Zusammensetzung keiner speziellen Einschränkung und enthält die für gebrannte Tonmaterialien üblichen Komponenten. So können neben dem Ton und dem erfindungsgemäß zu verwendenden Lackabfallprodukt noch Sand bzw. Silikate, Gelluloseabfälle, Holzmehl usw. enthalten sein. Weitere Komponenten sind für derartige Mischungen übliche Zusätze, unter die z.B. Glasfasern und Schlämme aus der Papierverarbeitung fallen, oder Hilfsmittel, die den Sinterprozeß beeinflußen, z.B. Erdalkalicarbonate.

Bei den aus der erfindungsgemäßen Verwendung resultierenden gebrannten Tonmaterialien kann es sich um sämtliche gängige Produkte handeln, die aus derartigen Materialien hergestellt werden. Insbesondere handelt es sich jedoch um Ziegelbaustoffe wie z. B. Ziegelsteine, Dachpfannen und ähnliches. Auch Tongranulate (Blähton) sowie Formgegenstände wie Vasen und Töpfe fallen unter die über die erfindungsgemäße Verwendung erzielbaren Produkte.

Gegenstand der Erfindung ist somit auch ein gebranntes Tonmaterial, welches der vorliegenden Verwendung entstammt.

Die folgenden Beispiele erläutern die Erfindung, ohne sie zu beschränken.

### Beispiel für die Ziegelherstellung

Bei der Vermischung eines Lehmgemisches, in das zur Erzielung bestimmter Ziegeleigenschaften Stoffe wie Glasfasern, Quarz usw. zugegeben werden, wird Lackkoagulat in einer Menge von 0,1 bis 30 Gew.-%, vorzugsweise 0,1 bis 10 Gew.-% und insbesondere 1 bis 5 Gew.-% zugesetzt. Aus dieser Mischung werden z. B. Mauerziegel geformt und nach üblichen Verfahren gebrannt. Die erhaltenen Ziegel haben ein um 10 bis 50 % besseres Wärmedämmungsverhalten (K-Wert) und eine um 10 bis 30 % verbesserte Biegefestigkeit, verglichen mit üblichen Ziegeln aus einer Standardproduktion.

### Anwendungsbeispiel:

3 Gew.-% Lackkoagulat aus naßabscheidenden Lackieranlagen, koaguliert mit einer Wachsdispersion (z. B. Divinol Koag 486), werden in eine L e h m - Quarz-Standardmischung homogen eingemischt und daraus Lochziegel geformt (Länge 240 mm, Breite 115 mm, Höhe 113 mm).
Nach dem Brennvorgang bei ca. 900°C werden Ziegel erhalten, die im Mittel einen K-Wert von 1,9 W/m² K haben.
Die Standardprodukte ohne Lackkoagulatzusatz haben demgegenüber eine K-Wert von 2,2 W/m²K.
Werden Lackkoagulate verwendet, die mit einem hohen Anteil (>5 %, bezogen auf die Trockensubstanz des Lackkoagulats) von tonerdehaltigen Koaguliermmitteln erzeugt wurden, resultieren brüchige Ziegelsteine.

## Patentansprüche

1. Verwendung von Lackabfall, Lackkoagulat oder mit Lackabfall beaufschlagten Feststoffen aus Lackieranlagen als Bestandteil für die Herstellung von gebrannten Tonmaterialien mit verbesserter Wärmedämmung und/oder verbesserten mechanischen Eigenschaften in einer Menge von 0,1 bis 30 Gew.-%, bezogen auf die nicht-gebrannte Tonmaterialmischung.

2. Verwendung gemäß Anspruch 1, dadurch gekennzeichnet, daß der Lackabfall, das Lackkoagulat oder die mit Lackabfall beaufschlagten Feststoffe in einer Menge von 1 bis 10 Gew-%, bezogen auf die nicht-gebrannte Tonmaterialmischung zum Einsatz gelangen.

3. Verwendung gemäß Anspruch 1, dadurch gekennzeichnet, daß man einer Naßabscheidung entstammendes Lackkoagulat einsetzt, welches durch mechanische Entwässerung auf einen Festkörpergehalt von 20 bis 95 Gew.-% gebracht worden ist.

4. Verwendung nach Anspruch 3, dadurch gekennzeichnet, daß man einer Naßabscheidung entstammendes Lackkoagulat einsetzt, welches durch mechanische Entwässerung auf einen Festkörpergehalt von 60 bis 80 Gew.-% gebracht worden ist.

5. Verwendung gemäß einem der Ansprüche 1 oder 2, dadurch gekennzeichnet, daß man einer Naßabscheidung entstammendes Lackkoagulat einsetzt, welches durch thermische Trockung auf einen Festkörpergehalt von bis zu 100 Gew.-% gebracht worden ist.

6. Verwendung gemäß einem der Ansprüche 1 oder 2, dadurch gekennzeichnet, daß man durch Trockenabscheidung erhaltene Lackabfälle oder mit Lackabfällen beaufschlagte Feststoffe, z. B. Filtermatten aus trockenabscheidenden Lackieranlagen, einsetzt.

7. Verwendung gemäß einem der Ansprüche 1 bis 6, dadurch gekennzeichnet, daß man einen Lackabfall, ein Lackkoagulat oder mit Lackabfällen beaufschlagte Feststoffe eines reaktiven, mehrkomponentigen Lackes einsetzt.

8. Verwendung gemäß einem der Ansprüche 1 bis 6, dadurch gekennzeichnet, daß man einen Lackabfall, ein Lackkoagulat oder mit Lackabfall beaufschlagte Feststoffe eines ofentrocknenden oder bei Normaltemperatur trocknenden Lackes einsetzt.

## Claims

1. Use of enamel waste, coagulated enamel or solids contaminated with enamel waste from enamelling works as an ingredient for the manufacture of fired clay materials with improved heat insulation and/or improved mechanical properties in a quantity of 0.1 to 30 % by weight, based on the unfired clay mixture.

2. Use according to claim 1, characterised in that the enamel waste, the coagulated enamel or the solids contaminated with enamel waste are used in a quantity of 1 to 10 % by weight, based on the unfired clay mixture.

3. Use according to claim 1, characterised in that a coagulated enamel originating from wet precipitation is used, which has been adjusted to a solids content of from 20 to 95 % by weight by mechanical dewatering.

4. Use according to claim 3, characterised in that a coagulated enamel originating from wet precipitation is used, which has been adjusted to a solids content of from 60 to 80 % by weight by mechanical dewatering.

5. Use according to one of claims 1 or 2, characterised in that a coagulated enamel originating from wet precipitation is used, which has been adjusted to a solids content of up to 100 % by weight by thermal drying.

6. Use according to one of claims 1 or 2, characterised in that enamel waste obtained by dry precipitation or solids contaminated with enamel waste, e.g. filter mats from dry precipitation enamelling works, are used.

7. Use according to one of claims 1 to 6, characterised in that enamel waste, coagulated enamel or solids contaminated with enamel waste from a reactive, multicomponent enamel are used.

8. Use according to one of claims 1 to 6, characterised in that enamel waste, coagulated enamel or solids contaminated with enamel waste from a kiln-drying enamel or from an enamel which dries at normal temperature are used.

## Revendications

1. Utilisation de déchets de peinture, de substances coagulées de peinture ou de matières solides chargées de déchets de peinture provenant d'installations de peinture en tant que composants pour la préparation de pâte céramique cuite présentant une isolation thermique améliorée et/ou des propriétés mécaniques améliorées dans une quantité de 0,1 à 30 % en poids rapportés au mélange de pâte céramique non cuite.

2. Utilisation selon la revendication 1, caractérisée en ce que les déchets de peinture, les substances coagulées de peinture ou les matières solides chargées de déchets de peinture sont utilisés dans une quantité de 1 à 10 % en poids rapportés au mélange de pâte céramique non cuite.

3. Utilisation selon la revendication 1, caractérisée en ce que l'on utilise des substances coagulées de peinture provenant d'un procédé de séparation par voie humide qui par déshydratation mécanique ont été amenées à une teneur en matières sèches de 20 à 95 % en poids.

4. Utilisation selon la revendication 3, caractérisée en ce que l'on utilise des substances coagulées de peinture provenant d'un procédé de séparation par voie humide qui par déshydratation mécanique ont été amenées à une teneur en matières sèches de 60 à 80 % en poids.

5. Utilisation selon l'une des revendications 1 ou 2, caractérisée en ce que l'on utilise des produits coagulés de peinture résultant d'un procédé de séparation par voie humide, qui par séchage thermique ont été portés à une teneur en matières sèches jusqu'à 100 % en poids.

6. Utilisation selon l'une des revendications 1 ou 2, caractérisée en ce que l'on utilise des déchets de peinture obtenus par procédé de séparation par voie sèche ou des matières solides chargées de déchets de peinture, par exemple des tapis de filtration provenant d'installations de peinture fonctionnant selon le procédé de la séparation par voie sèche.

7. Utilisation selon l'une des revendications 1 à 6, caractérisée en ce que l'on utilise des déchets de peinture, des substances coagulées de peinture ou des matières solides chargées de déchets de peinture d'une peinture réactive à plusieurs composants.

8. Utilisation selon l'une des revendications 1 à 6, caractérisée en ce que l'on utilise des déchets de peinture, des substances coagulées de peinture ou des matières solides chargées de déchets de peinture provenant d'une peinture séchée au four ou séchée à température normale.
